# EUROPÄISCHE PATENTSCHRIFT

(11) **EP 2 569 917 B1**
(45) Veröffentlichungstag und Bekanntmachung des Hinweises auf die Patenterteilung: **02.10.2013**
(21) Anmeldenummer: 10773241.4
(22) Anmeldetag: 11.10.2010
(51) Int. Cl.: H04L 29/08

(54) **VERFAHREN ZUR KOMMUNIKATION EINES TEILNEHMERGERÄTES MIT EINEM DIENST**
METHOD OF COMMUNICATION OF A SUBSCRIBER TERMINAL WITH A SERVICE
PROCEDE DE COMMUNICATION D'UN TERMINAL D'ABONNE AVEC UN SERVICE

(43) Veröffentlichungstag der Anmeldung: 20.03.2013
(73) Patentinhaber: Siemens Enterprise Communications GmbH & Co. KG, 81379 München (DE)
(72) Erfinder: TIETSCH, Michael, D-86916 Kaufering (DE); KLAGHOFER, Karl, D-81373 München (DE); PRANGE, Holger, D-81373 München (DE); SCHARNAGL, Thomas, AT-2380 Perchtoldsdorf (AT)
(74) Vertreter: Fritzsche, Thomas
(86) Internationale Anmeldenummer: PCT/EP2010/006200
(87) Internationale Veröffentlichungsnummer: WO 2012/048716

(56) Entgegenhaltungen:
- US-A1- 2007 099 634
- US-A1- 2007 286 160
- US-A1- 2007 298 813

## Beschreibung

Die Erfindung betrifft ein Verfahren zur Kommunikation eines Teilnehmergerätes mit einem Dienst, der eine Information über den Standort des Teilnehmergeräts benötigt. Derartige Dienste werden auch als standortbezogene Dienste (englisch: Location Based Services, LBS oder auch Location Dependent Services, LDS) bezeichnet.

Im Rahmen solcher Dienste werden einem Endbenutzer unter Zuhilfenahme von positionsabhängigen Daten, die sich auf den Standort des Teilnehmergerätes des Endbenutzers beziehen, Informationen bereitgestellt oder Dienste anderer Art erbracht, deren Art oder Inhalt vom Standort des Endbenutzers abhängt oder deren Erbringung eine Kenntnis des Standorts des Endbenutzers voraussetzt. Häufig handelt es sich dabei um Dienste im Rahmen mobiler Kommunikationssysteme, bei denen der Endbenutzer ein mobiles Kommunikationsendgerät, beispielsweise ein Mobiltelefon benutzt, sodass der Standort des Endbenutzers dem Diensterbringer nicht vorab bekannt sein kann, weshalb dem Diensterbringer Daten über die Position des Endbenutzers oder über die Position seines Endgerätes übermittelt werden müssen.

Als Endbenutzer wird in dieser Beschreibung ein Benutzer eines Teilnehmerendgerätes bezeichnet. Der Standort des Teilnehmerendgerätes des Endbenutzers wird nachstehend aus Gründen der sprachlichen Vereinfachung auch kurz als Standort des Endbenutzers bezeichnet, obwohl, wenn nichts anderes ausdrücklich bestimmt wird, der Standort des Teilnehmerendgerätes gemeint ist.

Standortbezogene Dienste können aber auch im Zusammenhang mit stationären Endgeräten, beispielsweise in Telefonnetzen angeboten werden, wobei hier sowohl herkömmliche, verbindungsorientierte Telefonnetze, als auch paketvermittelte, insbesondere auf dem Internet-Protokoll basierende Telefonnetze in Betracht kommen. Bei herkömmlichen sogenannten Festnetzen kann der Standort des Endbenutzers häufig aus seiner Rufnummer ermittelt werden, weil die Rufnummern in diesen Netzen häufig nach einem geografischen Rufnummernplan vergeben werden.

Die Rufnummern werden hier häufig standortbezogen vergeben, weil die Hardware-Struktur dieser Netze an der geografischen Verteilung der Teilnehmergeräte orientiert ist, sodass in diesen Fällen aus den ersten Stellen einer Rufnummer mit Hilfe der zugrundeliegenden Rufnummernpläne auf den Standort geschlossen werden kann. Beispiele hierfür sind die Ortsnetzvorwahl, die einen Rückschluss auf die Region zulässt, in der der Endbenutzer ansässig ist. Die Erfindung ist jedoch nicht auf derartige Rufnummernpläne beschränkt.

Mit der zunehmenden Bedeutung von internetbasierten Geräten und Kommunikationssystemen entsteht jedoch ein zunehmendes Bedürfnis, den Standort eines Kommunikationsendgerätes auf anderem Wege als aus seiner Rufnummer zu ermitteln, weil derartige Geräte häufig keine Rufnummer verwenden, die einen Rückschluss auf den Standort des Endgerätes zulässt und auch keine anderweitige Information aussenden, die einen Rückschluss auf den Standort des Gerätes zulässt.

Die US 2007/286160 A1 beschreibt ein Verfahren und eine Vorrichtung zur Verarbeitung von Nachrichten gemäß dem sog. "Session Initiation Protocol" (SIP) im Zusammenhang mit einem sog. "Voice over IP" (VoIP) Endgerät.

Die US 2007/099634 A1 beschreibt ein Verfahren und eine Vorrichtung zur Bereitstellung von Ortsinformation in einem drahtlosen Maschennetzwerk.

Die US 2007/298813 A1 beschreibt ein System und eine Verfahren zur Bereitstellung eines Deskriptors für eine Ortsinformation an einen Empfänger.

Der vorliegenden Erfindung liegt die Aufgabe zugrunde, eine technische Lehre anzugeben, mit der standortbezogene Dienste auch von solchen Endgeräten und in solchen Netzen genutzt werden können, bei oder in denen eine Verwendung oder Aussendung einer standortbezogenen Information auf Seiten des Endgeräts nicht vorgesehen ist. Beispiele für solche Endgeräte sind Internet-Telefone, Notebooks, Desktop-Computer oder andere für die Kommunikation geeignete informationstechnische Geräte, denen häufig innerhalb eines lokalen Netzes nur eine Adresse, vorzugsweise eine Internet-Adresse, zugewiesen ist, die keine Rückschlüsse auf den Standort des Gerätes erlaubt.

Diese Aufgabe wird erfindungsgemäß durch ein Verfahren zur Kommunikation eines Teilnehmergerätes mit einem Dienst nach Anspruch 1 gelöst.

Erfindungsgemäß ist hierbei ein Verfahren zur Kommunikation eines Teilnehmergerätes mit einem Dienst vorgesehen, der eine Information über den Standort des Teilnehmergeräts benötigt, bei dem das Teilnehmergerät eine Nachricht an den Dienst sendet, die eine Information über den Standort des Teilnehmergerätes enthält und bei dem wenigstens eine Information über den Standort des Teilnehmergerätes in wenigstens einer Komponente eines Netzwerks gespeichert ist und durch eine Komponente eines Netzwerks bereitgestellt wird.

In diesem Zusammenhang ist unter einem Teilnehmergerät jede Art von Gerät zu verstehen, das ein Kommunikationsteilnehmer zur Kommunikation verwendet. Wichtige Beispiele für Teilnehmergeräte sind Kommunikationsendgeräte, wie beispielsweise Telefone oder andere zur Kommunikation verwendbare informationstechnische Geräte, wie Personalcomputer oder ähnliche Geräte.

Unter einer von einem Teilnehmergerät an einen Dienst gesendeten Nachricht, die eine Information über den Standort des Teilnehmergerätes enthält, ist in diesem Zusammenhang jede Nachricht zu verstehen, die im Zeitpunkt ihres Empfangs durch den Dienst eine Information über den Standort des Teilnehmers enthält, unabhängig davon, zu welchem Zeitpunkt oder an welcher Stelle des Übertragungsweges der Nachricht diese Information über den Standort des Teilnehmergerätes in die Nachricht eingefügt wurde.

Unter einer Komponente eines Netzwerks ist in diesem Zusammenhang jede Einrichtung eines zur Kommunikation geeigneten Netzwerks zu verstehen, die dazu eingerichtet ist, eine Information über den Standort des Teilnehmergerätes zu speichern und zur Kommunikation bereitzustellen.

Eine bevorzugte Ausführungsform der vorliegenden Erfindung sieht ein Verfahren vor, bei dem wenigstens eine Information über den Standort des Teilnehmergerätes durch das Teilnehmergerät von einer Komponente eines Netzwerks bezogen, im Teilnehmergerät gespeichert und beim Senden einer Nachricht an den Dienst vom Teilnehmergerät in die Nachricht eingefügt wird. Der Vorgang des Beziehens der Information über den Standort des Teilnehmergerätes erfolgt dabei vorzugsweise bei der Anmeldung des Teilnehmergerätes in dem Netzwerk, welches das Teilnehmergerät für die Kommunikation verwendet.

Die Netzwerkkomponente, von der die Information über den Standort des Teilnehmergerätes bezogen wird, ist dazu vorzugsweise von einem Administrator mit der Information über den Standort des Teilnehmergerätes versehen worden. Diese Information wird vorzugsweise von dem Administrator in der Netzwerkkomponente vorab gespeichert. Bei der Anmeldung des Teilnehmergerätes im Netzwerk wird die Information über den Standort des Teilnehmergerätes vorzugsweise aus dem Speicher der Netzwerkkomponente, in welcher die Information über den Standort des Teilnehmergerätes durch den Administrator gespeichert wurde, auf das Teilnehmergerät übertragen, in ihm gespeichert und beim Senden einer Nachricht an den Dienst vom Teilnehmergerät in die Nachricht eingefügt.

Bei anderen bevorzugten Ausführungsbeispielen der Erfindung, die vorzugsweise auch mit vorher beschriebenen oder mit weiteren Ausführungsbeispielen der Erfindung kombiniert werden können, ist ein Verfahren vorgesehen, bei dem wenigstens eine Information über den Standort des Teilnehmergerätes beim Senden einer Nachricht an den Dienst durch eine Komponente eines Netzwerks in die Nachricht eingefügt wird. Bei diesen Ausführungsformen der Erfindung wird die Information über den Standort des Teilnehmergerätes vorzugsweise nicht im Teilnehmergerät gespeichert, sondern von der Komponente eines Netzwerks nachträglich in die Nachricht eingefügt. Dies geschieht vorzugsweise dadurch, dass eine von dem Teilnehmergerät gesendete Nachricht, in der eine Information über den Standort des Teilnehmergerätes zunächst fehlt, nachträglich um eine Information über den Standort des Teilnehmergerätes ergänzt wird.

Vorzugsweise kann dies in einer Netzwerkkomponente geschehen, über welche die Nachricht an den Dienst weitergeleitet wird, und welche das Fehlen einer Information über den Standort des Teilnehmergerätes detektiert und vorzugsweise diese Information in die Nachricht einfügt oder zur Einfügung dieser Information die Nachricht an diejenige Komponente eines Netzwerks weiterleitet, welche das Einfügen der Information über den Standort des Teilnehmergerätes vornimmt.

Vorzugsweise ist erfindungsgemäß vorgesehen, dass wenigstens eine in einer Komponente eines Netzwerks gespeicherte Information über den Standort des Teilnehmergerätes unabhängig von einer Netzwerkadresse des Teilnehmergerätes ist. Hiermit ist insbesondere der Vorteil verbunden, dass Netzwerkadressen vom Netzwerkadministrator oder von einer anderen Instanz unabhängig vom Standort des Teilnehmergerätes vergeben werden können. Änderungen der Netzwerkkonfiguration erfordern oder bewirken bei diesen Ausführungsformen keine Prüfung oder Änderung der Information über den Standort des Teilnehmergerätes.

Einige bevorzugte Ausführungsformen der Erfindung sehen vor, dass wenigstens eine in einer Komponente eines Netzwerks gespeicherte Information über den Standort des Teilnehmergerätes für eine Mehrzahl von räumlich benachbarten Teilnehmergeräten identisch ist. Diese Ausführungsformen sind mit dem Vorteil verbunden, dass in Fällen, in denen keine höhere Genauigkeit bei der Information eines standortabhängigen Dienstes über den Standort eines Teilnehmergerätes erforderlich ist, der Standort eines Teilnehmergerätes weniger genau angegeben werden kann. So kann beispielsweise anstelle des Raumes in einem Gebäude lediglich die Gebäudenummer angegeben werden.

Bei einigen bevorzugten Ausführungsformen der Erfindung ist es vorgesehen, dass wenigstens eine bereitgestellte Information über den Standort des Teilnehmergerätes in einem an den Empfänger der Nachricht oder an den von diesem Empfänger angebotenen Dienst angepassten Format bereitgestellt wird. Vorzugsweise erfolgt dabei eine Umwandlung des bereitgestellten Formates in Abhängigkeit von dem adressierten Dienst. So kann beispielsweise eine Gebäude- und/oder Raumnummer in geographische Koordinaten des Standortes umgewandelt werden, wenn der Dienst, der von dem Teilnehmer, welcher das Teilnehmergerät bedient, eine Bereitstellung der Standort-Information in diesem Format bevorzugt oder benötigt. Das bevorzugte Format ist der diese Information bereitstellenden Netzwerkkomponente vorzugsweise bekannt oder es wird dieser Komponente durch den Dienst bekanntgegeben, vorzugsweise in einem Dialog mit dem Dienst und der Komponente von der Komponente erfragt. Die Erfindung ist in keiner Weise auf ein bestimmtes Format beschränkt.

Die Erfindung sieht vor, dass wenigstens eine in einer Komponente eines Netzwerks gespeicherte Information über den Standort des Teilnehmergerätes an dem Teilnehmergerät wenigstens zeitweise angezeigt oder angesagt wird. Hierzu ist das Teilnehmergerät vorzugsweise mit einer Anzeigerichtung oder einer akustischen Ausgabeeinrichtung ausgestattet, und die Netzwerkkomponente, in welcher die Information über den Standort des Teilnehmergeräts gespeichert ist, übermittelt diese Information zeitweise oder zu bestimmten Anlässen an das Teilnehmergerät, wodurch eine Anzeige oder Ansage der Information über den Standort des Teilnehmergerätes an dem Teilnehmergerät bewirkt wird. Hiermit ist der Vorteil verbunden, dass der Teilnehmer, welcher sich dieses Teilnehmergerätes zur Kommunikation bedienen wird, die Möglichkeit erhält, die Richtigkeit der Standort-Information auf einfache Weise zu prüfen.

Dabei erfolgt diese Anzeige oder Ansage in der Weise, dass ein Teilnehmer nach der Anzeige oder Ansage der wenigstens einen in einer Komponente eines Netzwerks gespeicherten Information über den Standort des Teilnehmergerätes eine Möglichkeit zur Bestätigung der Richtigkeit dieser Information, zur Wiederholung ihrer Anzeige oder Ansage, oder zu ihrer Kennzeichnung als unrichtig durch eine entsprechende Eingabe an dem Teilnehmergerät erhält. Vorzugsweise ist das Teilnehmergerät hierfür mit einer entsprechenden Eingabeeinrichtung ausgestattet, über welche eine Bestätigung der Richtigkeit der Information, eine Wiederholung ihrer Anzeige oder Ansage oder ihre Kennzeichnung als unrichtig erfolgen kann.

Gemäß der Erfindung ist vorgesehen, dass ein Teilnehmergerät für wenigstens einen Dienst, der eine Information über den Standort des Teilnehmergerätes benötigt, wenigstens zeitweise gesperrt wird, wenn ein Teilnehmer durch eine entsprechende Eingabe an dem Teilnehmergerät nach der Anzeige oder Ansage der wenigstens einen in einer Komponente eines Netzwerks gespeicherten Information über den Standort des Teilnehmergerätes diese Information als unrichtig gekennzeichnet hat.

Einige bevorzugte Ausführungsformen der Erfindung sehen vor, dass wenigstens eine in einer Komponente eines Netzwerks gespeicherte Information über den Standort des Teilnehmergerätes an dem Teilnehmergerät angezeigt oder angesagt wird, nachdem eine Komponente eines Netzwerks eine Änderung der Netzwerkstruktur registriert hat. Dies erfolgt vorzugsweise dann, wenn eine Netzwerkstruktur durch Hinzufügung oder Entfernen von Komponenten oder durch deren Austausch geändert wurde, oder wenn die Adresszuweisung oder andere Parameter des Netzwerks geändert wurden, die Einfluss auf die Kommunikation in dem Netzwerk haben könnte oder haben wird.

Im Folgenden wird die Erfindung anhand bevorzugter Ausführungsbeispiele und mit Hilfe von Figuren näher beschrieben.

### Dabei zeigt

FIG. 1 in schematischer Weise den Nachrichtenfluss bei einer ersten Ausführungsform der Erfindung;
FIG. 2 in schematischer Weise den Nachrichtenfluss bei einer zweiten Ausführungsform der Erfindung;
FIG. 3 in schematischer Weise den Nachrichtenfluss bei einer dritten Ausführungsform der Erfindung;

Die Erfindung bietet eine Möglichkeit standortbezogene Dienste mit Kommunikationsgeräten zu nutzen, die noch nicht mit einer Möglichkeit ausgestattet sind, den eigenen Standort zu bestimmen und/oder diese Information über ihren eigenen Standort in einer Nachricht an einen standortbezogenen Dienst weiterzugeben. Standortbezogene Dienste setzen aber voraus, den Standort eines Kommunikationsgerätes, wie beispielsweise eines Telefons zu kennen. Hilfskonstrukte, bei der beispielsweise die IP-Adresse als Indikator für den Standort eines Kommunikationsgerätes verwendet werden, sind mit Schwierigkeiten verbunden, beispielsweise wegen der Adressübersetzung (Network Address Translation, NAT) oder wegen der dynamischen Adressvergabe durch sogenannte DHCP-Server (Dynamic Host Configuration Protocol, DHCP).

Eine standortbezogene Vergabe von IP-Adressen (Internet-Protokoll-Adressen) oder von sogenannten Fully Qualified Domain Names (FQDNs) und deren behelfsweise standortspezifische Interpretation sind mit verschiedenen Problemen verbunden und verursachen einen häufig erheblichen Zusatzaufwand bei der Netzwerkadministration. Derartige Schwierigkeiten lassen sich durch geeignete Ausführungsformen der vorliegenden Erfindung vermeiden. Bei einer bevorzugten Ausführungsform der Erfindung stellt beispielsweise ein sogenannter Network-Access Control (NAC) Switch (auch: Network Admission Control), also eine Einrichtung in einem Netzwerk, die den Zugang zu diesem Netzwerk kontrolliert, sicher, dass Netzwerkgeräte sich normalerweise in einem Firmennetzwerk oder in einem lokalen Netzwerk an einem bestimmten Switch oder Port anmelden.

Network Admission Control (NAC) ist eine Technologie, die den Netzwerkzugang jeglicher am Netzwerk angeschlossener oder anzuschließender Geräte kontrolliert. Beispielsweise prüfen NAC-Komponenten in Netzwerken häufig die Berechtigung eines Teilnehmerendgerätes, sich an einem bestimmten Anschluss dieses Netzes anzuschließen. Dazu verfügen NAC-Komponenten mit dieser Funktionalität vorzugsweise über Informationen über den Ort des Anschlusses, an dem diesen Teilnehmerendgerät angeschlossen werden soll. Beschreibungen der NAC-Technologie finden sich beispielsweise auf http://www.enterasys.com/company/literature/nac-ds.pdf oder http://www.enterasys.com/products/advanced-security-apps/enterasys-network-access.aspx.

Router sind häufig auf OSI Schicht 3 agierende Netzwerkgeräte, die mehrere Rechnernetze - je nach Sichtweise - koppeln oder trennen. Dabei analysiert der Router die ankommenden Datenpakete nach ihrer Zieladresse und blockt diese oder leitet sie weiter. "Geroutete", d.h. durch einen Router weitergeleitete, Pakete gelangen so entweder in ein direkt am Router angeschlossenes Zielnetz oder werden zu einem anderen im Netz erreichbaren Router weitergereicht.

Für einige Ausführungsbeispiele der Erfindung kommen bevorzugt Router mit einer funktionellen Erweiterung zum Einsatz, die ihnen ein Agieren auf der OSI-Schicht 5 ermöglicht. Insbesondere soll es solchen erfindungsgemäß funktionell erweiterten Routern möglich sein, Nachrichten daraufhin zu untersuchen, ob sie an einen standortbezogenen Dienst adressiert sind. Die Erfindung ist jedoch nicht auf Ausführungsbeispiele beschränkt, die die Verwendung solcher funktionell erweiterten Router voraussetzen.

Bei einer ersten Gruppe von bevorzugten Ausführungsformen der Erfindung, die nicht die Verwendung solcher funktionell erweiterten Router voraussetzen, ist es vorgesehen, die Information über den Standort des Teilnehmergerätes stets in jede Nachricht einzufügen. Dann ist zumindest sichergestellt, dass diese Information über den Standort des Teilnehmergerätes in jeder Nachricht enthalten ist, insbesondere in solchen Nachrichten, die an standortbezogene Dienst gesendet werden sollen. Falls diese Vorgehensweise im Hinblick auf die Datenschutzrichtlinien eines Netzwerkbetreibers als ungünstig erscheinen sollte, sieht die Erfindung bevorzugte Ausführungsformen vor, bei denen die Information über den Standort des Teilnehmergerätes durch hierfür vorgesehene Komponenten, beispielsweise sogenannte "OSV-Switches" aus solchen Nachrichten wieder herausgefiltert wird, die nicht an einen standortbezogenen Dienst adressiert sind. Diese Ausführungsformen sind mit dem Vorteil verbunden, dass das Wissen über die Notwendigkeit und / oder den Inhalt standortbezogener Informationen nur in solchen Komponenten vorgehalten werden oder verfügbar sein muss, die an Entscheidungen über die Verarbeitung von Anrufen ("call processing") beteiligt sind. Die Belastung des Netzes wird hierdurch gering gehalten und private oder schützenswerte Informationen bleiben geschützt.

Bei einer zweiten Gruppe von bevorzugten Ausführungsformen der Erfindung, die nicht die Verwendung solcher funktionell erweiterten Router voraussetzen, ist es vorgesehen, ein Profil oder mehrere Profile vorzuhalten, die vorzugsweise zentral verwaltet werden, in denen die Zielrufnummern standortbezogener Dienste, beispielsweise Notrufnummern der Polizei, der Feuerwehr, oder ähnlicher Dienste hinterlegt werden. Vorzugsweise können dabei für jeden Teilnehmer noch weitere Profile vorgesehen sein, in denen dieser Teilnehmer dezentral weitere Nummern (beispielsweise Rufnummern von Dienstleistungsunternehmen wie z.B. von Pizza-Services) hinterlegen kann, an die eine Information über den Standort des Teilnehmergerätes übermittelt werden soll.

Diese Ausführungsformen der Erfindung bieten den Vorteil, dass der Aufwand für eine zentrale Verwaltung solcher Profile auf das notwendige Maß beschränkt werden könnte, und dass überdies noch private Einstellungen leicht realisierbar wären, vorzugsweise auch in Abhängigkeit von der Uhrzeit oder anderer Parameter. Auch bei diesen Ausführungsformen der Erfindung sind bevorzugte Varianten möglich, bei denen orts- und/oder zeitabhängig durch hierfür vorgesehene und geeignete, vorzugsweise programmierte Instanzen vorzugsweise automatisch entschieden wird, ob und an welche Zielrufnummern eine Information über den Standort des Teilnehmergerätes mitgegeben wird.

Ein Switch (engl. Schalter; auch Weiche) ist ein vorzugsweise auf OSI Schicht 2 agierendes Kopplungselement, das Netzwerk-Segmente miteinander verbindet. Der Begriff bezieht sich auf ein Netzwerkgerät, das Daten auf dem Data Link Layer (Layer 2) des OSI-Modells weiterleitet.

Der NAC-Switch hat somit Kenntnis über alle im Netzwerk angemeldeten Geräte, wobei ihm regelmäßig, d.h. in aller Regel, der Switch-Port, die IP-Adresse und der Gerätetyp der am Netzwerk angemeldeten Geräte bekannt sind.

Zur Realisierung der vorliegenden Erfindung kann eine NAC-Komponente vorzugsweise noch um eine auf "Layer 5" arbeitende Funktion erweitert werden, die vorzugsweise einen Datenverkehr auf der Grundlage des sogenannten Session Initiation Protocol (SIP) in ähnlicher Weise analysiert, wie beispielsweise ein sogenannter Session Border Control (SBC).

Die Schicht 5 (engl. Session Layer, Steuerung logischer Verbindungen, auch als Sitzungsschicht oder Kommunikationssteuerungsschicht bezeichnet), sorgt für die Prozesskommunikation zwischen zwei Systemen.
Als OSI-Schichtenmodell (auch OSI-Referenzmodell; englisch Open Systems Interconnection Reference Model) wird ein Schichtenmodell der Internationalen Organisation für Normung (ISO) bezeichnet, das als Designgrundlage von Kommunikationsprotokollen in Rechnernetzen entwickelt wurde. Die Aufgaben der Kommunikation wurden dazu in sieben aufeinander aufbauende Schichten (layers) unterteilt. Für jede Schicht existiert eine Beschreibung, in welcher steht, was diese zu leisten hat. Diese Anforderungen müssen von den Kommunikationsprotokollen realisiert werden. Die konkrete Umsetzung wird dabei nicht vorgegeben und kann daher sehr unterschiedlich sein. Somit existieren mittlerweile für jede der sieben Schichten zahlreiche solcher Protokolle.

Ein Session Border Controller (SBC) ist eine Einrichtung insbesondere in IP-basierten Telefonnetzen wie beispielsweise sogenannten Voice-over-IP-Networks. Ihre Funktion wird beispielsweise in dem Wikipedia-Beitrag http://en.wikipedia.org/wiki/Session_border_controller beschrieben. In diesen Netzen findet häufig auch das Session Initiation Protocol (SIP) Anwendung. Dieses Protokoll wird beispielsweise in dem Wikipedia-Beitrag http://de.wikipedia.org/wiki/Session_Initiation_Protocol beschrieben und in RFC3261 und anderen RFCs standardisiert.

Sendet nun ein Telefon einen sogenannten SIP-Request, also eine Anfrage an einen Dienst mit Hilfe des Session Initiation Protocols, und ist dieser Dienst ein standortabhängiger Dienst (Location Dependent Service), beispielsweise eine Notrufnummer oder ein anderer standortabhängiger Dienst, dann würde diese "Layer 5"-SIP-Funktion aktiv werden und die entsprechende Standort-Information in den ausgehenden SIP-Request einbauen, sodass diese in Richtung SIP-Server mit standortspezifischen Informationen versehen werden, auch wenn die sendenden Teilnehmergeräte über keine Möglichkeit verfügen, die von ihnen ausgesandten Nachrichten selbst mit einer Standort-Information auszustatten.

Eine solche Vorgehensweise ist beispielsweise in Verbindung mit Telefonendgeräten vorteilhaft, die keine standortspezifische Information speichern und daher auch keine standortspezifische Information in ausgehende Nachrichten einfügen können. Auf diese Weise wird es möglich, eine echte, von IP-Adressen oder FQDNs unabhängige Kommunikation mit standortabhängigen Diensten durchzuführen. Ganze Telekommunikationsanlagen mit derartigen Endgeräten könnten mit Hilfe der vorliegenden Erfindung auch ohne eine Änderung der Software der Telefonendgeräte dazu eingerichtet werden, standortabhängige Dienste zu adressieren. Dazu könnten vorzugsweise bereits vorhandene Netzwerkkomponenten, wie beispielsweise ein NAC-Switch entsprechend erweitert oder ergänzt oder durch neue NAC-Switches ersetzt werden, je nachdem welche Maßnahme mit geringerem Aufwand verbunden ist.

Als Standort-Information kommt vorzugsweise eine in der Netzwerkkomponente, also beispielsweise in dem NAC-Switch vorkonfigurierter Textbaustein infrage, oder ein sogenanntes PIDF-LO-Objekt oder ein anderes Format, in dem eine standortspezifische Information gespeichert sein könnte.

Die Erfindung sieht also in einigen Ausführungsformen eine Modifikation des Datenverkehrs, beispielsweise eines Datenverkehrs auf der Grundlage des SIP-Protocols vor, wozu sich beispielsweise sogenannte Session Border Controller (SBCs) eignen. Vorzugsweise wird die Erfindung daher realisiert, indem NAC-Switches um eine standortspezifische SBC-Komponente erweitert werden.

Im Falle von geschützten Verbindungen, die beispielsweise nach dem Transport Layer Security-Protocol (TLS) nach RFC5246 und andere RFCs geschützt sind (http://de.wikipedia.org/wiki/Transport_Layer_Security), sind andere Ausführungsformen der Erfindung vorzuziehen, bei denen der NAC-Switch keine Modifikation einer SIP-Nachricht innerhalb des SIP-Signalisierungspfades vornehmen muss. In diesen Fällen ist es bevorzugt, dass der NAC-Switch als Dienst für andere an Standort-Informationen interessierte Netzwerkelemente, beispielsweise für den SIP-Switch arbeitet, und diese Netzwerkselemente mit der Standort-Information versorgt. Der SIP-Switch stellt daher im Falle einer mit TLS verschlüsselten Nachricht eine Anfrage an die mit der Standort-Information versehenen Netzwerkkomponente, beispielsweise an den NAC-Switch und erfragt die hinterlegte Standort-Information vom NAC-Switch und kann diese Information dann innerhalb des SIP-Switches in die Signalisierungsinformation einbauen. Ein Vorteil der Erfindung ist darin zu sehen, dass die standortbezogene Information direkt aus der Netzwerkinfrastruktur und den Registrierungsinformationen der angeschalteten Telefone oder Teilnehmergeräte bezogen wird, sodass eine Fehlkonfiguration weitgehend vermieden werden kann.

Eine zentrale Netzwerkkomponente, vorzugsweise ein NAC-Switch übernimmt dabei die Rolle der Zuordnung der Standort-Information zu einem bestimmten Teilnehmergerät im Netzwerk, beispielsweise zu einem Telefon. Somit können auch Geräte, die über keine im Gerät gespeicherte Standort-Information oder über eine Möglichkeit zur anderweitigen Ermittlung ihrer Standort-Information verfügen, in die Lage versetzt werden, standortabhängige Dienste zu adressieren.

Die Gesetzgeber vieler Länder schreiben heute vielfach vor, dass Notrufe zu einer Notrufzentrale regelmäßig mit einer Teilnehmerrufnummer des absetzenden Endgeräts abgesetzt werden müssen, unter welcher ein Rückruf zu dem Notrufabsetzenden Teilnehmer möglich ist. Auch andere, sogenannte standortbezogene Dienste benötigen standortspezifische Informationen zu ihrer Abwicklung.

Bei traditionellen, d. h. auf analoge oder auf TDMbasierender Infrastruktur bereitet das wenig Probleme, da Standort und Rufnummer eindeutig zugeordnet werden können. Bei dieser Art von Infrastrukturen bleibt die Position des Telefons stets gleich.

Bei modernen, vorzugsweise bei IP-basierten Telefonen ist der Standort des Telefons jedoch nicht immer der gleiche. Dieser kann innerhalb des Unternehmensnetzwerks beinahe beliebig gewählt werden. Dies trifft auch zu auf sogenannte Soft-Clients, d. h. auf Telefonapplikationen, auf einem Notebook, die als Telefon verwendet werden. Mögliche bekannte Lösungen um den Standort eines Telefons zu bestimmen, sind folgende:
1. Bestimmung der IP-Adresse des rufenden Teilnehmergerätes und eine Korrelation mit einem Standort.
2. Bestimmung der FQDN aus der SIP-Message des rufenden Teilnehmers und Korrelation auf einen Standort.

Diese beiden Methoden haben den Nachteil, dass ein Datenelement implizit mit einer Standort-Information verknüpft wird. Solche impliziten Verfahren sind mit einer komplexen Planung, Administration und entsprechender Fehleranfälligkeit verknüpft.
3. Das Telefon bekommt eine Telefonnummer mit geographischer Bedeutung zugeordnet, die an die Notrufzentrale weitergeleitet wird und die für einen Rückruf verwendet werden kann. Diese Methode verlangt jedoch eine eigene "geographische Nummer" für jeden Benutzer, was häufig teuer und schwierig zu verwalten ist. Diese geographische Rufnummer wird auch als sogenannte Location Identification Number (LIN) bezeichnet. Diese kann sich auch von der richtigen Rufnummer des Teilnehmers unterscheiden, z. B. in einem sogenannten Unified Communication Umfeld, in dem nur sogenannte globale Nummern verwendet werden.
4. Das Telefon kennt bzw. ermittelt seinen Standort und schickt diesen in der Notruf-SIP-Nachricht, beispielsweise im sogenannten PIDF-LO-Format mit. Im Notfall muss dann jedoch diese Standort-Information wieder auf eine Rückrufnummer mit geographischer Bedeutung abgebildet werden, um über das sogenannte PSTN-Netz zur Notrufzentrale zu gelangen, was in der Regel mit Aufwand verbunden ist.

Häufig erfordern auch die verschiedenen standortbezogenen Dienste eine Versorgung mit Standort-Informationen in unterschiedlichen Datenformaten. So wird beispielsweise bei Notrufen eine standortspezifische Rufnummer benötigt, wogegen andere Dienste, beispielsweise die sogenannten GPS-Koordinaten eines Gerätes benötigen. Andere, beispielsweise E-Mail-Dienste, benötigen Informationen in Textform zum Standort des Gerätes, von dem die E-Mail geschickt wird, sodass diese Informationen in einer E-Mail verschickt werden können, beispielsweise im Format Stadt, Straße, Hausnummer. Auch gibt es standortbezogene Dienste, welche die Standort-Information in einer aufbereiteten Weise, z. B. in Form einer Pixel- oder Vektorgraphik benötigen.

Hierbei ist es grundsätzlich wünschenswert, dass während des Netzwerk-Betriebes keinerlei zusätzliche administrative Aktivitäten erforderlich werden. Ein störungsfreier Netzwerk-Betrieb weitestgehend ohne zusätzliche Eingriffe sollte gewährleistet sein, ohne, dass Benutzer oder Administratoren bei der Inanspruchnahme standortbezogener Dienste Änderungen oder Eingriffe vornehmen müssen.

Bei einigen Ausführungsformen der Erfindung bezieht das Teilnehmergerät, also beispielsweise ein Telefon-Endgerät oder eine Telefonapplikation auf einem Notebook aus der Netzwerkinfrastruktur eine standortbezogene Information, beispielsweise das sogenannte Ortskennzeichen (Location-Identifier, LID). Dieser sogenannte Location-Identifier ist vorzugsweise unabhängig von einer an das Teilnehmerendgerät vergebenen IP-Adresse oder von einem sogenannten FQDN. Dieses Ortskennzeichen wird vorzugsweise für einen bestimmten Switch-Port oder vorzugsweise für eine komplette Etage eines Gebäudes oder auch für das gesamte Gebäude vergeben.

Das Ortskennzeichen ist eine interne Größe, die den Ort des Teilnehmergerätes ("die Location") identifiziert und vorzugsweise vom Location Mapping Service auf ein von dem adressierten Dienst benötigtes Format gebracht wird. Wie weiter unten beschrieben, kann der Location Identifier auf eine Rückrufnummer (die Location Identification Number, LIN) gebracht werden. Diese Rückrufnummer (Location Identification Number, LIN) wird vorzugsweise im Notruffall verwendet. Aus einer in der Notrufzentrale vorzugsweise vorgesehen Datenbank können mittels des Ortskennzeichens (LIN) Daten des Anrufers ermittelt werden, vorzugsweise dessen Wohnadresse und /oder dessen Rückrufnummer. Das Ortskennzeichen (LIN) wird im Notruf als Rufnummer ("calling number") übermittelt und ist vorzugsweise in einer Datenbank der Notrufzentrale eingetragen.
Bei einigen Ausführungsformen der Erfindung ist es vorgesehen, dass wenn ein Gerät sich im Netzwerk anmeldet, dieses Gerät z. B. über Protokolle wie DHCP, LLDP-MED oder auch andere Protokolle das Ortskennzeichen erhält und dieses intern im Teilnehmergerät speichert. Vorzugsweise repräsentiert dabei das Ortskennzeichen eindeutig einen bestimmten Standort. Das Ortskennzeichen kann dabei für jeden Switch-Port in unterschiedlicher Weise vergeben werden, was mit einer bestmöglichen Genauigkeit (Ortsauflösung) verbunden ist.

Bei anderen Ausführungsbeispielen der Erfindung können aber auch mehrere oder alle LAN-Anschlüsse eines Gebäudestockwerkes oder auch eines gesamten Gebäudes das gleiche Ortskennzeichen erhalten. Die Vergabe gleicher Ortskennzeichen für verschiedene Switch-Ports ist eine Frage der erforderlichen Genauigkeit bzw. Ortsauflösung für die entsprechenden standortbezogenen Dienste.

Bei einigen Ausführungsbeispielen der Erfindung ist es vorgesehen, dass bei Anfragen an standortbezogene Dienste, beispielsweise in Form sogenannter SIP-Requests oder auch in Form anderer Protokolle, beispielsweise mit Hilfe des SOAP das Ortskennzeichen in transparenter Form mit der Nachricht, die an den standortbezogenen Dienst geschickt wird, mitgeschickt wird. Der Empfänger der Anfrage (des sogenannten Requests), also beispielsweise ein SIP-Server, wird dann vorzugsweise mit Hilfe eines entsprechenden Dienstes (Location-Mapping Service) das Ortskennzeichen in eine standortbezogene Information in einem von dem jeweiligen Dienst benötigten Format umwandeln.

Ein derartiger Location-Mapping Service ermöglicht es beispielsweise, entsprechende Standort-Informationen in jedem beliebigen Format für die verschiedensten standortbezogenen Dienste (Location Based Services) zu erzeugen. Für Notrufe wird dieses Ortskennzeichen vorzugsweise in eine sogenannte Location Identification Number (LIN) als Notruf-Rückrufnummer umgewandelt und weiter verwendet. Für andere standortbezogene Dienste (Location Based Services) kann das Ortskennzeichen in entsprechende Standort-Informationen abgebildet oder übersetzt werden.

Beispielsweise kann der Location Service die GPS-Koordinaten des Gerätestandortes bereitstellen, um diese in einer Landkarte oder Straßenkarte anzuzeigen. In anderen Ausführungsbeispielen der Erfindung kann der Location Service für den gleichen Standort die Adresse bereitstellen, vorzugsweise in der Form Stadt, Straße, Hausnummer, Flur, Raum, etc. In anderen Ausführungsbeispielen der Erfindung kann der Location-Mapping Service für das Versenden einer elektronischen Visitenkarte eine Kurzversion des Standortes bereitstellen. Bei anderen Ausführungsbeispielen der Erfindung kann der Location-Mapping Service entsprechende Bitmaps oder Vektorgraphiken mit den benötigten graphischen Informationen zur Verfügung stellen und mit der Nachricht versenden. Vorzugsweise wird als Eingangsgröße nur das generische Ortskennzeichen benötigt.

Der zur Umwandlung der Adressformate benötigte Location-Mapping Service, der das Ortskennzeichen vorzugsweise entsprechend der realen Gestaltung des Geländes und der Räumlichkeiten in entweder einen richtigen Standort oder in eine zu verwendende Notruf-Rückrufnummer umwandelt, ist eine vorzugsweise durch eine Netzwerkkomponente zur Verfügung gestellte Netzwerkfunktionalität. Der mit Hilfe des Location-Mapping Service erhaltene Standort eines Teilnehmergerätes kann auch für andere standortabhängige Dienste verwendet werden.

Da gemäß einiger Ausführungsformen der Erfindung das Ortskennzeichen automatisch aus der Netzwerkinfrastruktur, d. h. aus einer Komponente des Netzwerks geladen wird, wird durch diese Ausführungsform der Erfindung eine automatische Unterstützung von sogenannten nomadischen Gerätschaften ermöglicht, welche irgendwo innerhalb eines Unternehmensnetzwerks in Betrieb genommen werden.

Bei einigen Ausführungsformen der Erfindung wird das Ortskennzeichen aus den Informationsbestandteilen (Digits) von GPS-Koordinaten (Länge, Breite, Höhe) gebildet. Ein Ortskennzeichen in dieser Form wird auch durch informationstechnische Geräte lesbar (maschinenlesbar). Er kann somit im Fall eines Ausfalls des Location-Mapping Services zum Beispiel in der Notrufzentrale auch interpretiert werden.

Standortbezogene Dienste, wie beispielsweise Notrufe, erfordern häufig einen beträchtlichen Administrationsaufwand um die Standort-Informationen der Teilnehmergeräte, wie beispielsweise der Telefone, in die Netzwerkinfrastruktur einzubringen. Dies gilt unabhängig davon, ob die Standort-Information aus der Netzwerkinfrastruktur, über eine Vorkonfiguration der Netzwerk-Komponenten oder über andere Dienste bezogen und verwaltet werden.

Konfigurationsfehler können niemals völlig ausgeschlossen werden. In LAN-Verkabelungen von Bürogebäuden und ganzen Bürostandorten werden nicht selten viele Kilometer LAN-Kabel, diverse LAN-Switch-Hierarchien und Router verbaut. Oftmals gibt es dabei ein Nebeneinander von existierender (älterer) LAN-Verkabelung und neuen LAN-Kabeln, die zu der bisherigen Verkabelung hinzugefügt werden. In diesem Zusammenhang werden zuverlässige Prozesse, Methoden und Ausrüstungen benötigt, die die Korrektheit der standortbezogenen Information gewährleisten. Korrektheit heißt in diesem Fall, sicherzustellen, dass ein Teilnehmergerät sich auch tatsächlich an dem Standort befindet, für den sein Eintrag in der Netzwerkinfrastruktur konfiguriert ist.

Einige Ausführungsbeispiele der Erfindung sehen nun vor, eine Prüfung der Richtigkeit der Standort-Information durch den Teilnehmer, der ein Teilnehmergerät gewöhnlich benutzt, zu ermöglichen. Für den Fall eines Telefonendgerätes ist in diesem Zusammenhang vorzugsweise eine Telefon-Applikation vorgesehen, die mit Hilfe des Telefondisplays oder mit Hilfe eines Sprachmenüs mit dem Benutzer kommuniziert. Im Falle einer Applikation auf einem Notebook kann die vom Netzwerk ermittelte Standort-Information vorzugsweise über einen sogenannten Pop-up-Dialog oder ähnliches dem Benutzer oder Teilnehmer mitgeteilt werden.

Vorzugsweise wird dazu nach der Registrierung des Teilnehmergerätes im Netzwerk, d. h. in der Regel nach der Inbetriebnahme des Telefonendgerätes, des Notebooks oder anderen Teilnehmergerätes dem Benutzer oder Teilnehmer über ein Protokoll, beispielsweise das Session Initiation Protocol SIP oder das SOAP oder auch über andere Protokolle, die konfigurierte oder ermittelte Standort-Information über eine Anzeigeeinrichtung des Telefons (Display) oder auch über ein Telefonmenü textuell (also in Form eines Textes) angezeigt. Bei anderen Ausführungsbeispielen der Erfindung kann diese Information dem Benutzer oder Teilnehmer auch über eine Sprachsyntheseeinrichtung vorgelesen werden (Text-to-Speach).

Der Benutzer oder Teilnehmer hat dann die Möglichkeit, die angezeigte oder ausgegebene Standort-Information zu überprüfen und durch das Drücken einer bestimmten Taste die Richtigkeit der Information zu bestätigen. Beispielsweise könnte in diesem Zusammenhang das Drücken der Taste 1 die Bestätigung der Richtigkeit der Information bedeuten. Eine andere Taste könnte bedeuten, dass die Information nicht korrekt ist und der Netzwerkadministrator speziell diesen Eintrag korrigieren muss. Dies könnte z. B. durch das Drücken der Taste 2 geschehen, die dem Netzwerkadministrator anzeigt, dass die Standort-Information zu diesem Anschluss von ihm zu überprüfen ist. Das Drücken einer weiteren Taste, z. B. der Taste 3 könnte in diesem Zusammenhang bedeuten, dass die Anzeige oder Ansage zu wiederholen ist.

Falls der Benutzer die Taste 2, also die Taste, welche bedeutet, dass die ihm angezeigte Standort-Information fehlerhaft ist, betätigt, könnte dies eine Aktion auslösen, die die entsprechenden, standortbezogenen Dienste (Location Based Services) für dieses Gerät zeitweilig ausschaltet oder sperrt, bis die richtigen Standort-Informationen in der Netzwerkinfrastruktur oder in der zuständigen Komponente des Netzwerks eingetragen (provisioniert) sind. Zum Beispiel könnte eine E-Mail an den Systemadministrator versendet werden, welcher sich dann speziell um diesen Eintrag im System kümmern muss.

Vorzugsweise erfolgt die Überprüfung der Konsistenz der Standort-Informationen durch den Teilnehmer nur ein einziges Mal, nämlich, nachdem der LAN-Anschluss dieses Teilnehmergerätes provisioniert wurde. Danach ist eine Überprüfung regelmäßig nicht mehr erforderlich, d. h. ein Benutzer oder Teilnehmer muss nicht jedes Mal diese Prozedur der Überprüfung durchführen, da die Standort-Information an den LAN-Anschluss vorzugsweise fest gekoppelt ist. Das Gleiche ist der Fall, wenn anschließend ein anderes Gerät, beispielsweise ein Telefon an diesen Anschluss angeschlossen wird. Das Location Mapping System setzt in diesem Fall bei der Bestätigung der Korrektheit der Standort-Information eine entsprechende Informationseinheit, beispielsweise ein "Flag" (Correct-Flag), um ein erneutes Abfragen des Teilnehmers zu verhindern.

Bei einigen bevorzugten Ausführungsbeispielen der Erfindung ist die Netzwerkinfrastruktur durch hierzu vorgesehene Einrichtungen oder Netzwerkelemente in der Lage, eine Änderung der Netzwerk-Infrastruktur zu erkennen. Dies kann beispielsweise durch eine geänderte MAC-Adresse oder durch mehrere geänderte MAC-Adressen innerhalb des Systems geschehen und anschließend kann hierbei eine erneute Überprüfung der Standort-Information durch den Teilnehmer veranlasst werden.

In dem Fall, dass die Standort-Information als GPS-Koordinaten vorliegt und daher für einen Teilnehmer nicht ohne Weiteres zu überprüfen sind, kann dem Teilnehmer vorzugsweise eine Applikation zur Verfügung gestellt werden, welche die GPS-Koordinaten in einem Stadtplan in einer Landkarte darstellt. Auf diese Weise wird es dem Teilnehmer ermöglicht, auch Standortinformationen in einer Darstellung zu überprüfen, die ihm ursprünglich nicht zur Überprüfung zugänglich sind.

Mithilfe dieser Ausführungsbeispiele der Erfindung ist es möglich, Konfigurationsfehler bei der Konfiguration von Standortinformationen in Netzwerkkomponenten leicht zu erkennen und zu beheben.

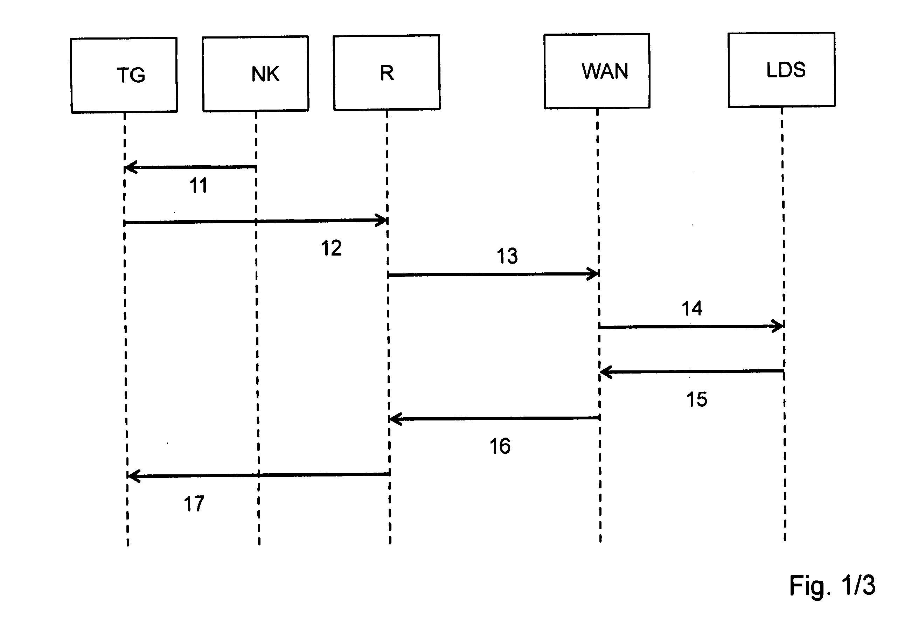

Die Figur 1 zeigt in schematischer Weise ein Ausführungsbeispiel der Erfindung, bei dem ein Teilnehmergerät TG eine Standortinformation 11 von einer Netzwerkkomponente NK bezieht und diese Standortinformation in eine Nachricht 12 einbaut, die in diesem Beispiel zunächst an einen Router R gesendet wird, welcher die Nachricht 13, 14 über ein großräumiges Netzwerk (Wide Area Network, WAN) an den Anbieter LDS eines standortbezogenen Dienstes weiterleitet. Da der Dienstanbieter des standortbezogenen Dienstes LDS die Standortinformation des Teilnehmergerätes in den Nachrichten 12, 13 und 14 übermittelt erhalten hat und diese ihm nun bekannt ist, kann er in standortbezogener Weise auf die Anfrage des Teilnehmergerätes antworten und sendet eine entsprechende Nachricht 15 über das Wide Area Network, welches diese 16 über den Router R an das Teilnehmergerät TG weiterleitet 17.

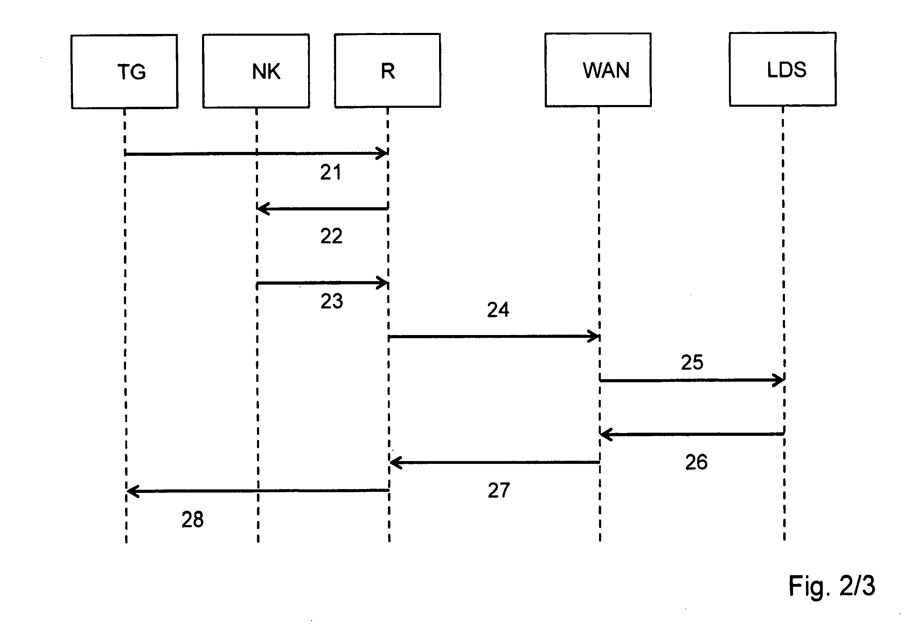

FIG. 2 zeigt in schematischer Weise ein weiteres Ausführungsbeispiel der Erfindung, bei dem das Teilnehmergerät TG eine Nachricht 21 an den Router R sendet, wobei diese Nachricht 21 keine standortbezogene Information über das Teilnehmergerät beinhaltet. Der Router R stellt fest, dass es sich um eine Nachricht an einen standortbezogenen Dienst LDS handelt und dass die Nachricht keine standortbezogene Information über das Teilnehmergerät TG beinhaltet. Daraufhin sendet der Router R eine Anfrage 22 an die Netzwerkkomponente NK, in der die standortbezogene Information über das Teilnehmergerät TG gespeichert ist.

Die Netzwerkkomponente NK beantwortet diese Anfrage des Routers R durch eine Nachricht 23 an den Router R, in der die standortbezogene Information über das Teilnehmergerät TG enthalten ist. Der Router R kann daraufhin die standortbezogene Information über das Teilnehmergerät TG in die vom Teilnehmergerät TG an den Router R gesandte Nachricht 21 einfügen und so eine Nachricht 24 generieren, welche der Router an das Wide Area Network weiterleitet 24, und welche über das Wide Area Network an den Anbieter des standortbezogenen Dienstes LDS weitergeleitet 25 wird.

Der standortbezogene Dienst nun im Besitz der standortbezogenen Information über das Teilnehmergerät TG kann die Anfrage 21 des Teilnehmergerätes TG nun in sachgerechter Weise, d. h. unter Verwendung der standortbezogenen Informationen des Teilnehmergerätes TG beantworten und sendet dazu 26 eine Nachricht an das Wide Area Network, welches diese Nachricht 27 in Router R an das Teilnehmergerät TG weiterleitet 28.

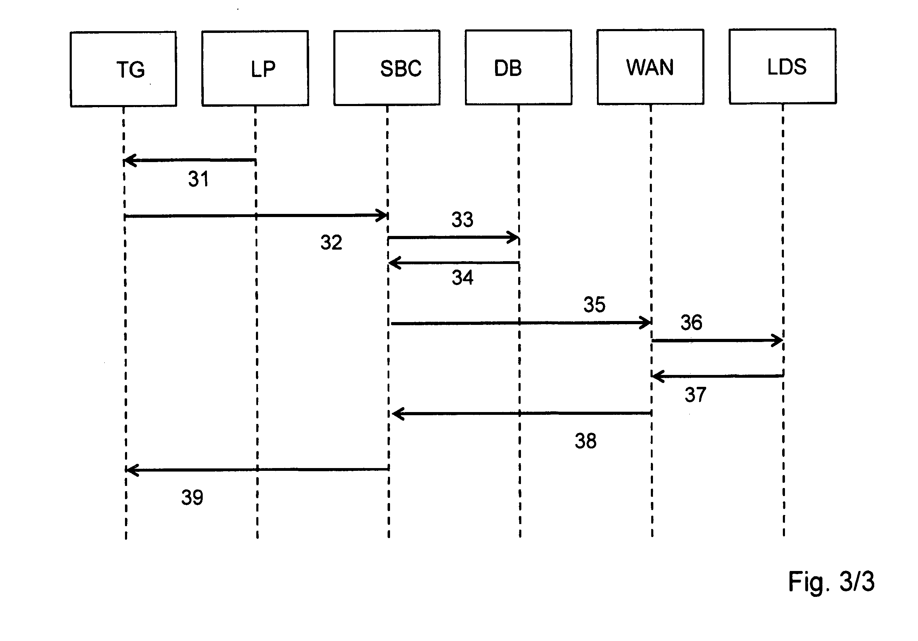

FIG. 3 zeigt in schematischer Weise ein weiteres Ausführungsbeispiel der Erfindung, bei dem ein Teilnehmergerät TG ein Ortskennzeichen (Location Identifier, LID) von einer Netzwerkinstanz LP bezieht, in der standortbezogene Informationen über Teilnehmergeräte des Netzwerks gespeichert sind. In dem Fall, dass das Teilnehmergerät nun eine Anfrage 32 an einen standortbezogenen Dienst LDS senden will, läuft diese Nachricht zunächst über ein sogenanntes Session Border Control SBC, welche die interne IP-Adresse des Teilnehmergerätes durch eine externe IP-Adresse ersetzt.

Da die Nachricht 32 in diesem Beispiel noch ein generisches Ortskennzeichen enthält, das für Rückrufe von außen nicht verwendet werden kann oder soll, tauscht das Session Border Control (SBC) in der Nachricht 32 auch das beispielsweise nur intern zu verwendende generische Ortskennzeichen, gegen einen auch extern gültigen Location Identifier, beispielsweise eine von extern zu verwendende Rufnummer, aus, indem das Session Border Control (SBC) zunächst eine entsprechende Anfrage an eine Datenbank DB richtet 33, welche diese Datenbank DB beantwortet 34, indem sie den extern gültigen Location Identifier an das Session Border Control (SBC) übermittelt 34. Dieser extern gültige Location Identifier wird vorzugsweise in einem für den adressierten standortbezogenen Dienst spezifischen Format eingfügt.

Die mit dem extern gültigen Location Identifier versehene Nachricht 32 wird daraufhin 35 über ein Wide Area Network WAN an den standortbezogenen Dienst LDS weitergeleitet 35, 36. Der standortbezogene Dienst, beispielsweise eine Notrufnummer leitet nun einen Rückruf 37, 38, 39 mithilfe der ihm übermittelten externen Rückrufnummer ein.

## Patentansprüche

1. Verfahren zur Kommunikation eines Teilnehmergerätes (TG) mit einem Dienst (LDS), der eine Information über den Standort des Teilnehmergerätes benötigt, bei dem das Teilnehmergerät eine Nachricht (12) an den Dienst (LDS) sendet, die eine Information (11) über den Standort des Teilnehmergerätes (TG) enthält, wobei
wenigstens eine Information (11) über den Standort des Teilnehmergerätes (TG) in wenigstens einer Komponente (NK) eines Netzwerks gespeichert ist und durch eine Komponente (NK) eines Netzwerks bereitgestellt wird,
**dadurch gekennzeichnet, dass**
- wenigstens eine in einer Komponente (NK) eines Netzwerks gespeicherte Information (11) über den Standort des Teilnehmergerätes (TG) an dem Teilnehmergerät (TG) wenigstens zeitweise angezeigt oder angesagt wird,
- ein Teilnehmer nach der Anzeige oder Ansage der wenigstens einen in einer Komponente (NK) eines Netzwerks gespeicherten Information (11) über den Standort des Teilnehmergerätes eine Möglichkeit
a) zur Bestätigung der Richtigkeit dieser Information,
b) zur Wiederholung ihrer Anzeige oder Ansage, oder
c) zu ihrer Kennzeichnung als unrichtig
durch eine entsprechende Eingabe an dem Teilnehmergerät (TG) erhält, und dass
- ein Teilnehmergerät für wenigstens einen Dienst, der eine Information über den Standort des Teilnehmergerätes benötigt, wenigstens zeitweise gesperrt wird, wenn ein Teilnehmer durch eine entsprechende Eingabe an dem Teilnehmergerät nach der Anzeige oder Ansage der wenigstens einen in einer Komponente eines Netzwerks gespeicherten Information über den Standort des Teilnehmergerätes diese Information als unrichtig gekennzeichnet hat.

2. Verfahren nach Anspruch 1, **dadurch gekennzeichnet, dass** wenigstens eine Information (11) über den Standort des Teilnehmergerätes (TG) durch das Teilnehmergerät von einer Komponente (NK) eines Netzwerks bezogen, im Teilnehmergerät gespeichert und beim Senden einer Nachricht an den Dienst (LDS) vom Teilnehmergerät in die Nachricht eingefügt wird.

3. Verfahren nach Anspruch 1, **dadurch gekennzeichnet, dass** wenigstens eine Information (11) über den Standort des Teilnehmergerätes (TG) beim Senden einer Nachricht an den Dienst (LDS) durch eine Komponente (NK) eines Netzwerks in die Nachricht eingefügt wird.

4. Verfahren nach einem der vorhergehenden Ansprüche, **dadurch gekennzeichnet, dass** wenigstens eine in einer Komponente (NK) eines Netzwerks gespeicherte Information über den Standort des Teilnehmergerätes (TG) unabhängig von einer Netzwerkadresse des Teilnehmergerätes ist.

5. Verfahren nach einem der vorhergehenden Ansprüche, **dadurch gekennzeichnet, dass** wenigstens eine in einer Komponente (NK) eines Netzwerks gespeicherte Information (11) über den Standort des Teilnehmergerätes (TG) für eine Mehrzahl von räumlich benachbarten Teilnehmergeräten identisch ist.

6. Verfahren nach einem der vorhergehenden Ansprüche, **dadurch gekennzeichnet, dass** wenigstens eine bereitgestellte Information (11) über den Standort des Teilnehmergerätes in einem an den Empfänger der Nachricht oder an den von diesem Empfänger angebotenen Dienst angepassten Format bereitgestellt wird.

7. Verfahren nach einem der vorhergehenden Ansprüche, **dadurch gekennzeichnet, dass** wenigstens eine in einer Komponente (NK) eines Netzwerks gespeicherte Information (11) über den Standort des Teilnehmergerätes an dem Teilnehmergerät (TG) angezeigt oder angesagt wird, nachdem eine Komponente (NK) eines Netzwerks eine Änderung der Netzwerkstruktur registriert hat.

## Claims

1. Method of communication of a subscriber terminal (TG) with a service (LDS) which requires information relating to the location of the subscriber terminal, wherein the subscriber terminal sends a message (12) to the service (LDS) containing information (11) about the location of the subscriber terminal (TG), wherein at least one information item (11) relating to this location of the subscriber terminal is stored in at least one component (NK) of a network and is provided by a component (NK) of a network, **characterised in that**
- at least one information item (11) stored in a component (NK) of a network and relating to the location of the subscriber terminal (TG) is displayed or stated for at least part of the time on the subscriber terminal (TG),
- after display or statement of the at least one information item (11) stored in a component (NK) of a network and relating to the location of the subscriber terminal (TG), a subscriber is given the opportunity
a) to confirm the correctness of this information,
b) to repeat its display or statement, or
c) to mark this as incorrect,
by a corresponding input on the subscriber terminal (TG), and that
- for at least one service which requires information relating to the location of the subscriber terminal, a subscriber terminal is blocked for at least part of the time if a subscriber terminal, by a corresponding input at the subscriber terminal after display or statement of the at least one information item stored in a component of a network and relating to the location of the subscriber terminal, has marked this information as incorrect.

2. Method according to claim 1, **characterised in that** at least one information item (11) relating to a location of the subscriber terminal (TG) is obtained by the subscriber terminal from a component (NK) of a network, stored in the subscriber terminal and on transmission of a message to the service (LDS), introduced by the subscriber terminal into the message.

3. Method according to claim 1, **characterised in that** on transmission of a message to the service (LDS), at least one information item (11) relating to the location of the subscriber terminal (TG) is inserted in the message by a component (NK) of a network.

4. Method according to any one of the preceding claims, **characterised in that** at least one information item stored in a component (NK) of a network and relating to a location of the subscriber terminal (TG) is independent of a network address of the subscriber terminal.

5. Method according to any one of the preceding claims, **characterised in that** at least one information item (11) stored in a component (NK) of a network and relating to a location of the subscriber terminal (TG) is identical for a plurality of physically adjacent subscriber terminals.

6. Method according to any one of the preceding claims, **characterised in that** at least one information item (11) provided and relating to the location of the subscriber terminal is provided in a format adapted to the recipient of the message or to a service offered to this recipient.

7. Method according to any one of the preceding claims, **characterised in that** at least one information item (11) stored in a component (NK) of a network and relating to a location of the subscriber terminal(TG) is displayed or stated on the subscriber terminal after a component (NK) of a network has registered a change in network structure.

## Revendications

1. Procédé de communication d'un terminal d'abonné (TG) avec un service (LDS) qui a besoin d'une information sur la position du terminal d'abonné, pour lequel le terminal d'abonné envoie un message (12) au service (LDS), lequel message contient une information (11) sur la position du terminal d'abonné (TG),
au moins une information (11) sur la position du terminal d'abonné (TG) étant enregistrée dans au moins un composant (NK) d'un réseau et étant mise à disposition par un composant (NK) d'un réseau,
**caractérisé en ce que**
- au moins une information (11) enregistrée dans un composant (NK) d'un réseau sur la position du terminal d'abonné (TG) est affichée ou annoncée au moins temporairement sur le terminal d'abonné (TG),
- un abonné a après l'affichage ou l'annonce de l'au moins une information (11) enregistrée dans un composant (NK) d'un réseau sur la position du terminal d'abonné une possibilité
a) de valider l'exactitude de cette information,
b) de répéter son affichage ou annonce ou
c) de la caractériser comme inexacte par une saisie correspondante sur le terminal d'abonné (TG), et **en ce que**
- un terminal d'abonné pour au moins un service qui a besoin d'une information sur la position du terminal d'abonné, est bloqué au moins temporairement si un abonné a caractérisé cette information comme inexacte par une saisie correspondante sur le terminal d'abonné après l'affichage ou l'annonce de l'au moins une information enregistrée dans un composant d'un réseau sur la position du terminal d'abonné.

2. Procédé selon la revendication 1, **caractérisé en ce qu'**au moins une information (11) sur la position du terminal d'abonné (TG) obtenue par le terminal d'abonné à partir d'un composant (NK) d'un réseau est enregistrée dans le terminal d'abonné et est insérée dans un message lors de son envoi au service (LDS) par le terminal d'abonné.

3. Procédé selon la revendication 1, **caractérisé en ce qu'**au moins une information (11) sur la position du terminal d'abonné (TG) est insérée dans un message lors de son envoi au service (LDS) par un composant (NK) d'un réseau.

4. Procédé selon l'une quelconque des revendications précédentes, **caractérisé en ce qu'**au moins une information enregistrée dans un composant (NK) d'un réseau sur la position du terminal d'abonné (TG) ne dépend pas d'une adresse de réseau du terminal d'abonné.

5. Procédé selon l'une quelconque des revendications précédentes, **caractérisé en ce qu'**au moins une information (11) enregistrée dans un composant (NK) d'un réseau sur la position du terminal d'abonné (TG) est identique pour une pluralité de terminaux d'abonné contigus dans l'espace.

6. Procédé selon l'une quelconque des revendications précédentes, **caractérisé en ce qu'**au moins une information mise à disposition (11) sur la position du terminal d'abonné est mise à disposition dans un format adapté au récepteur du message ou au service offert par ce récepteur.

7. Procédé selon l'une quelconque des revendications précédentes, **caractérisé en ce qu'**au moins une information (11) enregistrée dans un composant (NK) d'un réseau sur la position du terminal d'abonné est affichée ou annoncé sur le terminal d'abonné (TG) après qu'un composant (NK) d'un réseau a enregistré une modification de la structure du réseau.
